(19) **Europäisches Patentamt**
**European Patent Office**
**Office européen des brevets**

(11) **EP 2 854 301 B1**

(12) **EUROPEAN PATENT SPECIFICATION**

(45) Date of publication and mention
of the grant of the patent:
**02.01.2019 Bulletin 2019/01**

(51) Int Cl.:
**H04B 7/04** *(2017.01)*

(21) Application number: **13290235.4**

(22) Date of filing: **30.09.2013**

(54) **A method of operating a wireless communications system, a corresponding antenna controller, and radio access node**

Verfahren zum Betrieb eines drahtlosen Kommunikationssystems, zugehörige Antennensteuerung und Funkzugriffsknoten

Procédé d'exploitation d'un système de communication sans fil, contrôleur d'antenne correspondant et noeud d'accès radio

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.04.2015 Bulletin 2015/14**

(73) Proprietor: **Alcatel Lucent**
**91620 Nozay (FR)**

(72) Inventors:
• **Aydin, Osman**
**70569 Stuttgart (DE)**

• **Aziz, Danish**
**70435 Stuttgart (DE)**

(74) Representative: **Nokia EPO representatives**
**Nokia Technologies Oy**
**Karaportti 3**
**02610 Espoo (FI)**

(56) References cited:
**WO-A2-2006/059074      US-A1- 2011 150 050**
**US-A1- 2013 070 688      US-A1- 2013 077 597**

## EP 2 854 301 B1

**Description**

**Field of the invention**

The invention relates to wireless communications systems, and more particularly, to a method of operating a wireless communications system with multiple antennas. Further, the invention relates to a corresponding antenna controller for multiple antennas, and to a radio access node comprising the antenna controller according to the invention.

**Background**

Mobile communications systems have got a wide application. In the last decades, different succeeding mobile radio standards have been developed with increasing network capacity and transfer rate. For example, in mobile communication, Long Term Evolution (LTE) or LTE-Advanced, which is a fourth generation (4G) communication technology developed by the 3rd Generation Partnership Project (3GPP), is on the rise.

As it is known, in telecommunication sharing of resources can pertain to a hard resource sharing, soft resource sharing, or to a combination thereof, including a common controlling and/or management of the resources.

Existing solutions on the field of mobile telecommunication are often based on hard resource sharing. Hard resource sharing can refer to a mobile network infrastructure sharing, for example a sharing of a mobile base station hardware such as Node-B or Evolved Node-B (eNB) infrastructure and/or a backhaul network and/or a core network between the entities.

Soft resource can refer to a sharing of licensed and/or unlicensed, i.e. white space frequency spectrum. Further, soft resource sharing could be implemented via two separate schedulers, enabling a kind of "national roaming". For example, a first frequency band associated with a first mobile network operator and a second frequency band associated with a second mobile network operator can both allow access of user equipments (UE) with a subscription to the first operator and the second operator, as within the Broadcast control channel (BCCH) two operator IDs are included.

A combined sharing of both resource types can be accomplished with the help of advanced MAC layer procedures (Medium Access Control) and RRM procedures (Radio Resource Management). Therefore, a shared radio access network can provide sharing of both the radio hardware, for example the components of the eNB, and the corresponding soft radio resources, for example frequency spectrum. In addition, functional software modules like the scheduler can also be shared.

Further, for enhancing a bit rate and improving quality in a wireless communications system, certain multiplexing techniques, such as multiple-input multiple-output, MIMO, are known. In MIMO, both a transmitter and a receiver is respectively provided with multiple antennas. For example, a radio access node can comprise two or more antennas communicating with two or more receiver antennas. The receiver antennas in turn can be resided in the same user equipment or, in case of multi-user MIMO (MU-MIMO), can be spread over multiple user equipments for multiple autonomous communications.

Prior art patent document US 2011/150050 A1 relates to digital integrated antenna array system allowing for sharing among multiple operators which can be modified for use in a frequency division duplex scheme. Patent document US 2013/077597 A1 discloses a MU-MIMO system in which an eNodeB can transmit two parallel control channel data streams simultaneously to two different mobile terminals sharing the same frequency/time resource elements.

**Summary of the invention**

The present invention is defined in the independent claims. The dependent claims define embodiments of the present invention.

A method of operating a wireless communications system with multiple antennas for supplying a same spatial coverage area with wireless communications signals is provided. According to the method, the multiple antennas are shared by multiple mobile network operators.

In addition, according to an aspect of the invention, an antenna controller for controlling multiple antennas of a wireless communications system is provided. The antenna controller is adapted to control the multiple antennas to supply the same spatial coverage area with wireless communications signals so that the multiple antennas are shared by multiple mobile network operators.

Further, a corresponding radio access node is provided, which comprises the antenna controller.

Therefore, according to the invention, the performance of a wireless communications system can be increased. For example, it is possible to schedule different mobile network operators at the same time and frequency resource with the use of spatial domain multiplexing of multiple operators. Moreover, an operator fairness can faster be achieved, as is described in the following in greater detail.

According to an embodiment of the invention, multiple user equipments associated with at least two different network operators can be identified.

Further, a channel state information associated with the multiple user equipments can be evaluated.

Therefore, an optimal handling of various users which are currently within the coverage area can be furthermore achieved.

In one embodiment, a sharing of transmission power is performed for communicating with the user equipments associated with the different network operators.

According to a preferred embodiment, a multiple-input multiple-output, MIMO, transmission is performed.

In this way, one new dimension in the evolution of wireless networks, to share telecommunication resources between different entities, for example between wireless network operators, can optimally be addressed. Further, the sharing scenario in which different operators can share their hard resources and soft resources such as transmission power and time-frequency resources can be further improved. The sharing scenario can effectively be combined with an existing multi user multi antenna based, MU-MIMO, communication system.

In another embodiment, which also can be combined for example with the above-described embodiments, an antenna utility function is used, which comprises a fairness metrics to distribute time, frequency and transmission power resources among the operators.

In addition a user selection is performed, preferably on basis of a corresponding fairness criteria. The fairness criteria can be implemented with the above-mentioned utility function.

The fairness criteria can be selected in accordance with a data rate fairness agreed between the network operators. Alternatively or in addition, the fairness criteria can be selected in accordance with a predefined resource fairness.

Therefore, according to the invention, an improved multiple-operator based multiple-user MIMO system (MO-MU-MIMO) with a rate fairness and a resource fairness can be provided. A set of users in such an environment shared by multiple operators can be selected, wherein it is preferred to find a power allocation strategy that guarantees a given fairness criteria between the operators.

The user selection can be aided by applying of weighting factors to communications signals, which are intended for different user equipments associated with different operators.

According to an embodiment of the invention, a fine tuning of a ratio of an operator service share is achieved by applying a combination of operator sharing and a normal user sharing with the user equipments in the spatial coverage area. In this case, partly a multi-operator multi-user MIMO (MO-MU-MIMO) and partly merely multi-user MIMO (MU-MIMO) can be performed with the served user equipments.

According to the invention, not only time and frequency dimensions can be used for multi operator sharing scenarios. Instead, as already mentioned, a new spatial dimension for multi operator sharing in particular in multi user MIMO transmissions in a service area shared by multiple operators can be provided. Such a spatial service area or coverage area can be shopping mall or any other example suitable for multi operator sharing.

It can be mostly preferred to supply user equipments associated with different network operators within one and a same time-frequency resource element.

In such an example, a synergy effect achieved by the operator fairness algorithm can be maximized. The fairness criteria between the operators can be guaranteed up to the single time-frequency resource element. This is not possible with conventional solutions.

According to an embodiment of the invention, a Orthogonal Frequency-Division Multiplexing is applied. Similarly, the antenna controller can be further adapted to modulate antenna signals in accordance with a precoding strategy (e.g. Zeroforcing algorithm).

Further, optionally the invention comprises a hardware switch and/or a software switch for switching between different operator fairness algorithms. Such a switching can preferably applied between a rate fairness algorithm and/or a resource fairness algorithm.

This has an advantage that both rate fairness and resource fairness algorithms can be implemented in one algorithm with easy switching preferably by a software switch.

Moreover, it is possible to adapt the invention with a switching between a multiple operator sharing mode and a conventionally known single operator mode.

For example, if the switch for operator sharing is activated, which can be dependent on a current network load, the proposed MIMO transmission with multi operator sharing steps is performed. Otherwise, a conventional usage of MIMO can be activated for an one operator case.

**Brief description of the drawings**

In the following, preferred embodiment of the invention will be described in greater detail by way of example only making to the drawings in which:

Fig. 1    is a schematic flow chart illustrating a method 100 of operating a wireless communications systems according to a first embodiment of the invention;

Fig. 2    is a schematic flow chart illustrating a method 200 of operating a wireless communications systems according to a second embodiment of the invention;

Fig. 3    is a diagram illustrating a distribution of user equipments in a spatial coverage area according to a third embodiment of the invention, and

Fig. 4    is a diagram illustrating a MU-MIMO configuration, in which the invention can be used, according to a fourth embodiment of the invention.

**Detailed description**

In the following detailed description, reference is made to the accompanying drawings, which form a part hereof, and in which is shown by way of illustration specific embodiments in which the invention may be practiced. It is to be understood that other embodiments may be utilized. Structural or other changes may be made without departing from the scope of the present invention. The following detailed description, therefore, is not to be taken in a limiting sense, The scope of the present invention is defined by the appended claims.

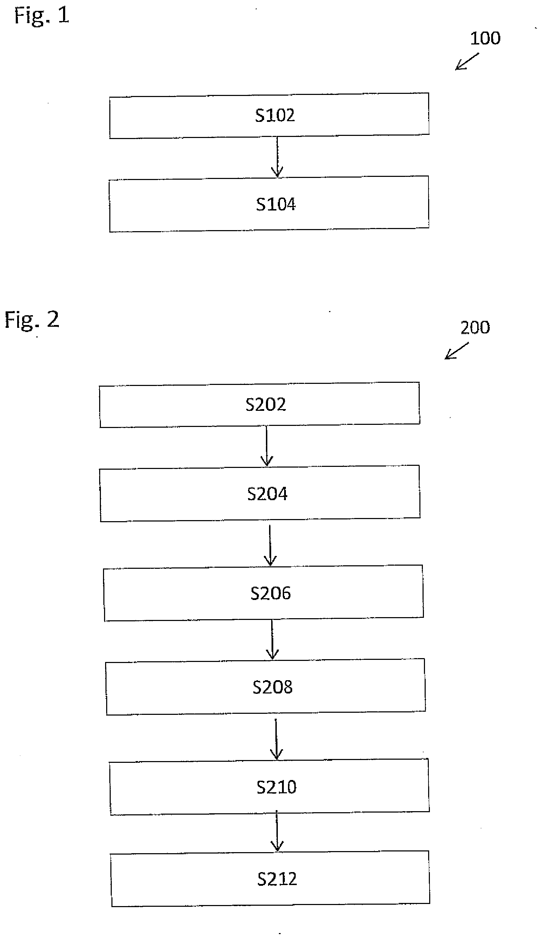

Fig. 1 shows a schematic flow chart illustrating a method 100 of operating a wireless communications systems according to a first embodiment of the invention. According to a step S102, a wireless communications system is operated, wherein during the operation multiple antennas are used for supplying a same spatial coverage area. According to a step S104, the multiple antennas are shared by multiple mobile network operators.

Fig. 2 shows a schematic flow chart illustrating a method 200 of operating a wireless communications systems according to a second embodiment of the invention. Similar as in Fig. 1, in step S202, a wireless communications system is operated, wherein during the operation multiple antennas are used for supplying a same spatial coverage area. Analog, in step S204, the multiple antennas are shared by multiple mobile network operators. Further, in step S206, user equipments are selected, which are associated to different mobile network operators. Then, in step S208, a multi-input multi-output, MIMO, transmission and is performed for communicating with the selected user equipments. Then, in step S210, another selection of user equipments is performed in accordance with a new user equipment distribution in the coverage area. Next, in step S212, a further multi-input multi-output, MIMO, transmission and is performed for communicating with the newly selected user equipments.

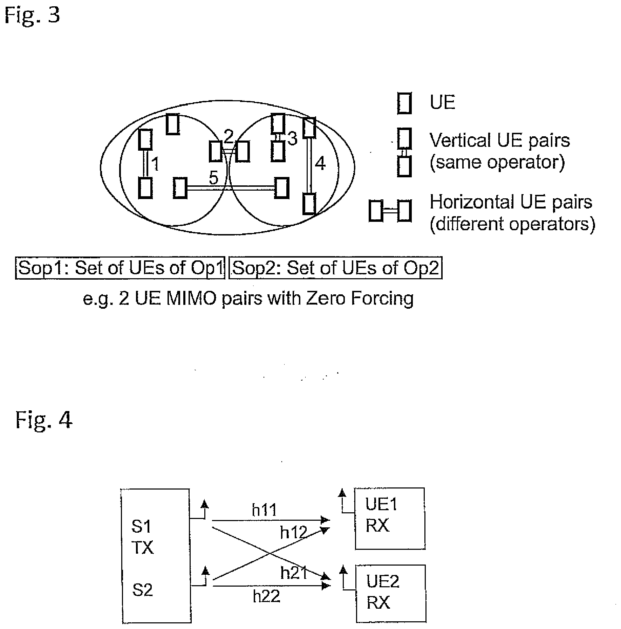

Fig. 3 is a diagram illustrating a distribution of user equipments in a spatial coverage area according to a third embodiment of the invention.

In a conventional (SoA) MU-MIMO implementation with single operator, and no sharing, users are selected and power is allocated on a scheduling resource to maximize the achievable sum rate of the system, cf. in the mathematical Annex, Table 1, case 0.

Consider the cell coverage area where hard and soft resources are shared by two operators Op1 and Op2 as shown in Fig. 3. We consider an example Orthogonal Frequency-Division Multiplexing (OFDM) based downlink transmission in considered coverage area. Let there be M transmit antennas at the transmitter which is serving (Lop1>M) and (Lop2>M) active number of users corresponding to Op1 and Op2 respectively (Lop1+Lop2 >M). As the number of active users is greater than the number of transmit antennas so the transmitter has to perform user selection. Let each user is equipped with N=1 receive antenna. We assume perfect channel knowledge and ideal feedback of channel state information at the transmitter. The transmitter serves each selected user with single data stream (r=1) by using for example the Zeroforcing based transmit precoding method.

Let Pmax be the maximum power that can be allocated to an schedulable unit of OFDM time-frequency resources. For example, in LTE based systems, in 10 MHz available system bandwidth, we have 50 physical resource block (PRB), each PRB contains 12 Sub Carriers in 14 symbols time [3GPP TS 36.814]. Hence a PRB can be considered as a schedulable unit in LTE. In 10 MHz we have then 50 schedulable units.

User Selection Criteria

In our considered scenario, a maximum of M users out of (Lop1+Lop2) active users can be selected for transmission on one OFDM scheduling unit. Let S be the set of selected users. To guarantee the operators fairness, the set S should be the union of two disjoint sets Sop1 and Sop2 [S = (Sop1 U Sop2)]. Where, Sop1 and Sop2 contain the active users of Op1 and Op2 respectively. For an example of M=2, size of S will be 2 that is two users will be selected for transmission each from one operator. We call this as Horizontal user selection the exemplary selection is shown in Figure 3.

Power Allocation Criteria

For an OFDM time-frequency unit, for example a PRB, the power is considered as a resource. In MO-MU-MIMO, the users for each PRB are selected according to above user selection criteria then the fairness is achieved by sharing the maximum available power to the selected users.

In a conventional method, no sharing between the operators, for the set of selected users, the power allocation is done to maximize the sum rate.

Example embodiments for guaranteed rate fairness for sharing (dynamic Power allocation):

For multi operator scenario, at first we consider the rate fairness criteria for the allocation of power in an OFDM time-frequency resource sample. The service provider in the considered coverage area offers a Rate fairness between the operators according to a predefined and pre-agreed ratio. Let $g_{RaF}$ be the agreed ratio for sharing the achievable rate between the operators. As we have selected the users for the transmission on a time-frequency sample, the achievable rate now depends upon the allocation of power. The power is allocated to each user equipment (UE) in the selected set Sop1 and Sop2 such that the following objective is achieved.

$$R_{j,Op1} = g_{RaF} R_{j,Op2},$$

With the total power constraint that:

$$P_{max} = \sum_{j=1}^{L_{RaF}} P_j$$

Where 'j' represents the user index in set S and Pj is the allocated power to user j, cardinality or size of set S K(S)=L_Raf.

Example embodiments for resource fairness for sharing (static Power allocation):

Similarly, the resource fairness can also be considered for the multi operator scenario. The network provider in the considered coverage area offers Resource fairness between the operators according to a predefined and pre agreed ratio. Let $g_{ReF}$ be the agreed ratio for sharing the resource between the operators. As we have selected the users for the transmission on a time-frequency sample, the resource fairness now refers to the allocation of power. The power is allocated to each user in the selected set Sop1 and Sop2 such that the following objective is achieved;

$$P_{k,Op1} = g_{ReF} P_{k,Op2}$$

With the total power constraint that is

$$P_{max} = \sum_{k=1}^{L_{ReF}} P_k$$

Where 'k' represents the user index in set S and Pk is the allocated power to user k, cardinality or size of set S K(S)=L_Ref.

The above 2 procedures are further illustrated in the mathematical annex, Table 1, by comparing each other and with the state of the art implementation of MIMO.

In some known systems, the user selection and power allocation are jointly done to maximize the sum rate of the system. We can also combine the two steps to fulfill the required fairness criteria for Multi Operator case.

Calculation details for a further understanding of embodiments of the invention, in particular in comparison with conventional calculations, can be taken from the following mathematical annex, in connection with Fig. 4.

**Mathematical Annex**

## Table 1: MIMO Usage in SoA and Operator Sharing Environment with Rate and Resource Fairness

| | 0) State of the Art (SoA) MIMO with 1 Operator | 1) MIMO with x Operators Sharing Rate Fairness | 2) MIMO with x Operators Sharing Resource Fairness |
|---|---|---|---|
| No of selected UEs $L$ | $L_{SoA}$ | $L_{RaF}$ | $L_{ReF}$ |
| General: System Rate $R_{Sys}$ | $R_{Sys,SoA} = \displaystyle\sum_{i=1}^{L_{SoA}} R_i$ | $R_{Sys,RaF} = \displaystyle\sum_{j=1}^{L_{RaF}} R_j$ | $R_{Sys,ReF} = \displaystyle\sum_{k=1}^{L_{ReF}} R_k$ |
| General: Total Power $P_{max}$ | $P_{max} = \displaystyle\sum_{i=1}^{L_{SoA}} P_i$ | $P_{max} = \displaystyle\sum_{j=1}^{L_{RaF}} P_j$ | $P_{max} = \displaystyle\sum_{k=1}^{L_{ReF}} P_k$ |
| User Selection $\kappa(S)$ is the cardinality of set S | Let S be the set of selected users $\kappa(S) = L_{SoA}$ <br><br> S with: $\arg max\,(R_{Sys,SoA})$ | Horizontal selection of UEs S = Sop1 U Sop2 $\kappa(S) = L_{RaF}$ | Horizontal selection of UEs S = Sop1 U Sop2 $\kappa(S) = L_{ReF}$ |
| Utility Function for Antenna Power (P) Distribution | $P_i = \arg max\,(R_{Sys,SoA})$ or $P_1 = P_2 = \cdots = P_{L_{SoA}} = \dfrac{P_{max}}{L_{SoA}}$ | Power $P_j$ per selected UE such that the rates per operator fulfills $R_{j,Op1}=g_{RaF}R_{j,Op2}$, <br><br> with operator sharing ratio g is given as $g_{RaF} = \dfrac{G_1}{G_2}$ with the operator specific ratio $G_x$ and Operator IDs x=1,2 | Power $P_{x,k}$ per selected UE such that the power $P_{k,Op1}=g_{ReF}P_{k,Op2}$ <br><br> with operator sharing ratio g is given as $g_{ReF} = \dfrac{G_1}{G_2}$ with the operator specific ratio $G_x$ and Operator IDs x=1,2 |
| Power Distribution on to the resource defined by f,t,code (here: example with f and t) | | | |

## Claims

1. A method of operating a wireless communications system with multiple antennas for supplying a same spatial coverage area with wireless communications signals, comprising sharing the multiple antennas by multiple mobile network operators, wherein the wireless communications signals are supplied to different user equipments in one and a same time-frequency resource element.

2. A method according to claim 1, wherein multiple user equipments associated with at least two different network operators are identified and/or wherein channel state information associated with the multiple user equipments is evaluated.

3. A method according to claim 2, wherein a multiple-input multiple-output, MIMO, transmission and a sharing of transmission power is performed for communicating with the user equipments associated with the different network operators.

4. A method according to any of claims 1 to 3, wherein a system utility function comprising fairness metrics is used and wherein a user selection is performed on basis of a corresponding fairness criteria.

5. A method according to claim 4, wherein the fairness criteria is selected in accordance with a data rate fairness and/or a radio resource fairness agreed between the network operators.

6. A method according to any of claims 1 to 5, wherein a fine tuning of a ratio of an operator service share is achieved by applying a combination of operator sharing and a normal user sharing within the spatial coverage area.

7. An antenna controller for controlling multiple antennas of a wireless communications system, adapted to control the multiple antennas to supply the same spatial coverage area with wireless communications signals so that the multiple antennas are shared by multiple mobile network operators, wherein the wireless communications signals are supplied to different user equipments in one and a same time-frequency resource element.

8. An antenna controller according to claim 7, further adapted to modulate the antenna signals in accordance with precoding strategies and/or to perform a multi-input multi-output, MIMO, wireless communication.

9. An antenna controller according to claim 8 or 7, further adapted to implement a data rate fairness algorithm and/or a resource fairness algorithm by user selection for operator sharing and/or applying weighting factors to communications signals, which are intended for different user equipments associated with different operators.

10. A radio access node comprising an antenna controller according to any of claims 7 to 9.

11. A radio access node according to claim 10, further comprising a hardware switch and/or a software switch for switching between different operator fairness algorithms, in particular between a rate fairness algorithm and/or a resource fairness algorithm.

12. A radio access node according to claim 11 or 10, further adapted for switching between a multiple operator sharing mode and a single operator mode.

**Patentansprüche**

1. Verfahren zum Betrieb eines drahtlosen Kommunikationssystems mit mehreren Antennen zum Versorgen eines gleichen räumlichen Abdeckungsbereichs mit drahtlosen Kommunikationssignalen, umfassend gemeinsames Nutzen der mehreren Antennen durch mehrere Mobilnetzwerkbetreiber,
wobei die drahtlosen Kommunikationssignale für unterschiedliche Benutzergeräte in ein und demselben Zeit-Frequenz-Ressourcenelement bereitgestellt werden.

2. Verfahren nach Anspruch 1, wobei mehrere mit mindestens zwei unterschiedlichen Netzwerkbetreibern verknüpfte Benutzergeräte identifiziert werden und/oder wobei mit den mehreren Benutzergeräten verknüpfte Kanalzustandsinformationen evaluiert werden.

3. Verfahren nach Anspruch 2, wobei eine Mehrfacheingang-Mehrfachausgangs-Übertragung, MIMO, multiple-input multiple-output, und ein Teilen von Übertragungsleistung für Kommunikation mit den Benutzergeräten in Verbindung mit den unterschiedlichen Netzwerkbetreibern durchgeführt werden.

4. Verfahren nach einem der Ansprüche 1 bis 3, wobei eine Systemdienstfunktion, umfassend Fairness-Metriken, verwendet wird, und wobei eine Benutzerauswahl auf Grundlage eines entsprechenden Fairness-Kriteriums durchgeführt wird.

5. Verfahren nach Anspruch 4, wobei das Fairness-Kriterium in Übereinstimmung mit einer Datenraten-Fairness und für eine Funkressourcen-Fairness, die zwischen den Netzwerkbetreibern vereinbart wurde, ausgewählt wird.

**6.** Verfahren nach einem der Ansprüche 1 bis 5, wobei eine Feinabstimmung eines Verhältnisses eines Betreiberdienstanteils durch Anwenden einer Kombination aus Betreiberanteil und normalem Benutzeranteil innerhalb des räumlichen Abdeckungsbereichs erreicht wird.

**7.** Antennensteuerung zum Steuern mehrerer Antennen eines drahtlosen Kommunikationssystems, angepasst zum Steuern der mehreren Antennen zum Versorgen des gleichen räumlichen Abdeckungsbereichs mit drahtlosen Kommunikationssignalen, sodass die mehreren Antennen von mehreren Mobilnetzwerkbetreibern gemeinsam genutzt werden, wobei die drahtlosen Kommunikationssignale für unterschiedliche Benutzergeräte in ein und demselben Zeit-Frequenz-Ressourcenelement bereitgestellt werden.

**8.** Antennensteuerung nach Anspruch 7, ferner angepasst zum Modulieren der Antennensignale in Übereinstimmung mit Vorcodierungsstrategien und/oder zum Durchführen einer drahtlosen Mehrfacheingang-Mehrfachausgangs-Kommunikation, MIMO.

**9.** Antennensteuerung nach Anspruch 8 oder 7, ferner angepasst zum Umsetzen eines Datenraten-Fairness-Algorithmus und/oder eines Ressourcen-Fairness-Algorithmus durch Benutzerauswahl für Betreiberanteil und/oder Anwenden von Gewichtungsfaktoren auf Kommunikationssignale, die für unterschiedliche Benutzergeräte in Verbindung mit unterschiedlichen Betreibern gedacht sind.

**10.** Funkzugriffsknoten, umfassend eine Antennensteuerung nach einem der Ansprüche 7 bis 9.

**11.** Funkzugriffsknoten nach Anspruch 10, ferner umfassend einen Hardwareschalter und/oder einen Softwareschalter zum Umschalten zwischen unterschiedlichen Betreiber-Fairness-Algorithmen, insbesondere zwischen einem Raten-Fairness-Algorithmus und/oder einem Ressourcen-Fairness-Algorithmus.

**12.** Funkzugriffsknoten nach Anspruch 11 oder 10, ferner angepasst zum Umschalten zwischen einem Teilungsmodus für mehrere Betreiber und einem Einzelbetreibermodus.

**Revendications**

**1.** Procédé de fonctionnement d'un système de communication sans fil pourvu de multiples antennes permettant de fournir une même zone de couverture spatiale dotée de signaux de communication sans fil, comprenant le partage des multiples antennes par de multiples opérateurs de réseaux mobiles,
dans lequel les signaux de communication sans fil sont fournis à différents équipements utilisateurs dans un et un même élément de ressources temps-fréquence.

**2.** Procédé selon la revendication 1, dans lequel les multiples équipements utilisateurs associés à au moins deux opérateurs de réseaux différents sont identifiés et/ou dans lequel des informations d'état de canal associées à de multiples équipements utilisateurs sont évaluées.

**3.** Procédé selon la revendication 2, dans lequel une transmission à entrées multiples sorties multiples, MIMO, et un partage de puissance de transmission sont exécutés pour une communication avec les équipements utilisateurs associés aux différents opérateurs de réseaux.

**4.** Procédé selon l'une quelconque des revendications 1 à 3, dans lequel une fonction d'utilité de système comprenant des métriques d'équité est utilisée et dans lequel une sélection d'utilisateur est exécutée sur la base d'un critère d'équité correspondant.

**5.** Procédé selon la revendication 4, dans lequel le critère d'équité est sélectionné en fonction d'une équité de débit de données et/ou d'une équité de ressources radio convenues entre les opérateurs de réseaux.

**6.** Procédé selon l'une quelconque des revendications 1 à 5, dans lequel un réglage fin d'un rapport d'un partage de services d'opérateurs est obtenu en appliquant une combinaison d'un partage d'opérateurs et d'un partage d'utilisateurs normal au sein de la zone de couverture spatiale.

**7.** Contrôleur d'antennes permettant de contrôler de multiples antennes d'un système de communication sans fil, adapté pour commander aux multiples antennes de fournir la même zone de couverture spatiale avec des signaux de communication sans fil de sorte que les multiples antennes sont partagées par de multiples opérateurs de réseaux mobiles, dans lequel les signaux de communication sans fil sont fournis aux différents équipements utilisateurs dans un ou un même élément de ressources temps-fréquence.

8. Contrôleur d'antennes selon la revendication 7, adapté en outre pour moduler les signaux d'antennes en fonction de stratégies de pré-codage et/ou pour exécuter une communication sans fil à entrées multiples sorties multiples, MIMO.

9. Contrôleur d'antennes selon la revendication 8 ou 7, adapté en outre pour mettre en oeuvre un algorithme d'équité de débit de données et/ou un algorithme d'équité de ressources par une sélection d'utilisateurs pour un partage d'opérateurs et/ou l'application de facteurs de pondération à des signaux de communication, qui sont prévus pour différents équipements utilisateurs associés aux différents opérateurs.

10. Noeud d'accès radio comprenant un contrôleur d'antennes selon l'une quelconque des revendications 7 à 9.

11. Noeud d'accès radio selon la revendication 10, comprenant en outre un commutateur matériel et/ou un commutateur logiciel permettant de commuter entre différents algorithmes d'équité d'opérateurs, en particulier entre un algorithme d'équité de débit et/ou un algorithme d'équité de ressources.

12. Noeud d'accès radio selon la revendication 11 ou 10, adapté en outre pour commuter entre un mode de partage d'opérateurs multiple et un mode d'opérateurs unique.

## Fig. 1

100

| S102 |
|---|

↓

| S104 |
|---|

## Fig. 2

200

| S202 |
|---|

↓

| S204 |
|---|

↓

| S206 |
|---|

↓

| S208 |
|---|

↓

| S210 |
|---|

↓

| S212 |
|---|

Fig. 3

UE

Vertical UE pairs
(same operator)

Horizontal UE pairs
(different operators)

Sop1: Set of UEs of Op1 | Sop2: Set of UEs of Op2

e.g. 2 UE MIMO pairs with Zero Forcing

Fig. 4

**EP 2 854 301 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011150050 A1
- US 2013077597 A1